# EUROPÄISCHE PATENTSCHRIFT

(11) **EP 0 680 983 B1**
(45) Veröffentlichungstag und Bekanntmachung des Hinweises auf die Patenterteilung: **29.07.1998**
(21) Anmeldenummer: 95106118.3
(22) Anmeldetag: 24.04.1995
(51) Int. Cl.: C08G 18/72, C08G 18/80, C08G 18/28, C08G 18/78, C08G 18/79, C09D 175/04

(54) **Wasserdispergierbare Polyisocyanat-Zubereitungen**
Water dispersible polyisocyanate preparations
Préparations de polyisocyanates dispersibles dans l'eau

(30) Priorität: 06.05.1994 DE 4416113
(43) Veröffentlichungstag der Anmeldung: 08.11.1995
(73) Patentinhaber: BAYER AG, 51368 Leverkusen (DE)
(72) Erfinder: Brahm, Martin, Dr., D-51766 Engelskirchen (DE); Kremer, Wolfgang, D-47647 Kerken (DE); Schmalstieg, Lutz, Dr., D-50676 Köln (DE); Probst, Joachim, Dr., D-51375 Leverkusen (DE); Kubitza, Werner, D-51377 Leverkusen (DE)

(56) Entgegenhaltungen:
- EP-A- 0 206 059
- EP-A- 0 540 985
- FR-A- 2 367 088

## Beschreibung

Die Erfindung betrifft nichtionisch-hydrophil modifizierte, Isocyanuratgruppen aufweisende Polyisocyanat-Zubereitungen, in denen sowohl aliphatische als auch aromatische Diisocyanate in chemisch eingebauter Form vorliegen, ein Verfahren zu ihrer Herstellung, ein wäßriges, derartige Polyisocyanat-Zubereitungen enthaltendes Beschichtungsmittel und dessen Verwendung.

In der Oberflächentechnologie spielt die ökologische Verträglichkeit der Lacke und Beschichtungsstoffe eine immer bedeutendere Rolle. Das vordringliche Problem ist dabei die Reduzierung der in Lacken und Beschichtungsstoffen verwendeten Mengen organischer Lösungsmittel. Einen wichtigen Beitrag zur Lösung dieses Problems liefern die in neuerer Zeit bekannt gewordenen wäßrigen Zweikomponenten-Polyurethanlacke, die ebenso wie die entsprechenden altbekannten, aus Lösung zu verarbeitenden Zweikomponenten-Polyurethanlacke die Herstellung von hochwertigen Lacküberzügen gestatten. Derartige Zweikomponenten-Polyurethan-Beschichtungen werden beispielsweise in EP-A-0 358 979, EP-A-0 543 228, EP-A-0 542 105 oder in den unter den Veröffentlichungsnummeren 9305087 bzw. 9309157 veröffentlichten PCT-Anmeldungen beschrieben. Von Bedeutung sind hierbei die Systeme der EP-A-0 358 979 auf Basis von ausgewählten, in Wasser löslichen bzw. dispergierbaren Polyacrylatharzen und vorzugsweise niedermolekularen aliphatischen Lackpolyisocyanaten. Die Lacke dieser Vorveröffentlichung trocknen relativ langsam, so daß sie für Anwendungsgebiete, bei denen es auf eine schnelle Trocknung entscheidend ankommt, wie z. B. der Holz- und Möbellackierung nur bedingt geeignet sind. Dies gilt auch für die Zweikomponenten-Systeme der unter der Offenlegungsnummer 191770/1984 veröffentlichten Japanischen Patentanmeldung 58-66736. Die in dieser Vorveröffentlichung beschriebenen Beschichtungsmittel zeigen nach eigenen Versuchen völlig unzureichende filmbildende Eigenschaften - es werden stets matte Filme mit starken Oberflächenstörungen erhalten, wobei zudem, wie aus den Ausführungsbeispielen ersichtlich, selbst bei Verwendung von aromatischen Polyisocyanaten Trocknungszeiten von 3 Tagen erforderlich sind.

Aus diesen Ausführungen ergibt sich die der Erfindung zugrundeliegende Aufgabe, die darin bestand, neue, wäßrige Zweikomponenten-Polyurethan-Beschichtungsmitel zur Verfügung zu stellen, die einerseits eine akzeptablen Verarbeitungszeit aufweisen, andererseits aber bei Raumtemperatur genauso schnell aushärten wie die bekannten, lösungsmittelhaltigen Zweikomponenten-Polyurethanlacke des Standes der Technik.

Wie jetzt überraschend gefunden wurde, gelingt die Lösung dieser Aufgabe bei Verwendung der nachstehend näher beschriebenen erfindungsgemäßen Polyisocyanat-Zubereitungen als Polyisocyanatkomponente in wäßrigen Zweikomponenten-Polyurethanlacken der beispielhaft genannten Art. Bei den erfindungsgemäßen Polyisocyanat-Zubereitungen handelt es sich um solche, in denen sowohl aliphatische als auch aromatische Diisocyanate in chemisch eingebauter Form vorliegen, wobei die aromatischen Diisocyanate vorzugsweise Teil von Isocyanuratgruppen aufweisenden Polyisocyanaten sind, während insbesondere die aliphatischen Diisocyanate Teil von üblichen Lackpolyisocyanaten sein können.

In einer Reihe von Veröffentlichungen wie z.B. EP-A-0 013 112, EP-A-0 061 628, DE-OS 2 908 844, DE-OS 2 921 681, DE-OS 4 136 618, GB-PS 1 444 933, US-PS 3 996 154 oder US-PS 5 200 489 wird die Herstellung von wasserdispergierbaren Polyisocyanaten durch Umsetzung von einfachen Diisocyanaten mit monofunktionellen Polyethylenoxidpolyethern beschrieben, wobei u.a. als geeignete Ausgangsdiisocyanate auch HDI bzw. TDI Erwähnung finden. In keiner der genannten Veröffentlichungen findet sich jedoch ein konkreter Hinweis auf hydrophil modifizierte Polyisocyanat-Zubereitungen, in denen sowohl HDI als auch TDI in chemisch eingebauter Form vorliegen. Demzufolge können die genannten Vorveröffentlichungen auch keinen Hinweis auf die erfindungsgemäß aufgefundenen Vorzüge von Polyisocyanat-Zubereitungen der erfindungsgemäßen Art vermitteln, zu denen nicht nur die bereits obengenannten vorteilhaften Eigenschaften, sondern auch eine besonders ausgeprägte, ausgezeichnete Verträglichkeit mit wäßrigen Polyacrylatdispersionen der in wäßrigen Zweikomponenten-Polyurethanlacken vorzugsweise eingesetzten Art gehört.

Gegenstand der Erfindung sind wasserdispergierbare Polyisocyanat-Zubereitungen auf Basis von aliphatischen und aromatischen Diisocyanaten, gekennzeichnet durch
a) einen Gehalt an Isocyanatgruppen (berechnet als NCO, Molekulargewicht = 42), bezogen auf Festharz, von 6 bis 21 Gew.-%,
b) ein Gewichtsverhältnis von
   b1) Teil mindestens eines modifizierten Polyisocyanats, ausgewählt aus der Gruppe bestehend aus Isocyanuratgruppen, Urethangruppen, Allophanatgruppen und Uretdiongruppen aufweisenden Polyisocyanaten, bildenden TDI-Einheiten (berechnet als C₉H₆N₂O₂, Molekulargewicht = 174)
      zu
   b2) Teil mindestens eines modifizierten Polyisocyanats, ausgewählt aus der Gruppe bestehend aus Isocyanuratgruppen, Urethangruppen, Allophanatgruppen, Uretdiongruppen und Biuretgruppen aufweisenden Polyisocyanaten, bildenden HDI-Einheiten (berechnet als C₈H₁₂N₂O₂, Molekulargewicht = 168)
      von 6:1 bis 0,1:1 und
c) einen Gehalt an innerhalb von endständigen Polyetherketten angeordneten Ethylenoxideinheiten (berechnet als C₂H₄O, Molekulargewicht 44) von 5 bis 40 Gew.-%, wobei die Polyetherketten im statistischen Mittel 6 bis 50 Ethylenoxideinheiten aufweisen.

Gegenstand der Erfindung ist auch ein Verfahren zur Herstellung von derartigen Polyisocyanat-Zubereitungen, welches dadurch gekennzeichnet ist, daß man
A) eine, gegebenenfalls ein Gemisch von unterschiedlichen Polyisocyanaten darstellende Polyisocyanatkomponente mit einem NCO-Gehalt von 12 bis 25 Gew.-%, in der sowohl
   A1) modifizierte Polyisocyanate mit eingebauten TDI-Einheiten, ausgewählt aus der Gruppe bestehend aus Isocyanuratgruppen, Urethangruppen, Allophanatgruppen und Uretdiongruppen aufweisenden Polyisocyanaten, als auch
   A2) eingebaute HDI-Einheiten aufweisende modifizierte Polyisocyanate, ausgewählt aus der Gruppe bestehend aus Isocyanuratgruppen, Urethangruppen, Allophanatgruppen, Uretdiongruppen und Biuretgruppen aufweisenden Polyisocyanaten, vorliegen,
      mit
B) einer einwertigen Polyetherkomponente, bestehend aus mindestens einem einwertigen Polyetheralkohol mit (im statistischen Mittel) von 6 bis 50 Alkylenoxideinheiten, die zu mindestens 70 Mol-% aus Ethylenoxideinheiten bestehen und
C) gegebenenfalls weiteren Alkoholen
unter Einhaltung eines NCO/OH-Äquivalentverhältnisses von 2:1 bis 120:1 umsetzt, wobei im übrigen Art und Mengenverhältnisse der Ausgangskomponenten so gewählt werden, daß die resultierenden Umsetzungsprodukte den unter a) bis c) gemachten Bedingungen entsprechen.

Gegenstand der Erfindung ist auch ein wäßriges Zweikomponenten-Polyurethan-Beschichtungsmittel, dessen Bindemittel im wesentlichen aus einer Kombination aus
I) einer erfindungsgemäßen Polyisocyanat-Zubereitung und
II) einer in Wasser löslichen oder dispergierbaren Polyhydroxylkomponente in einem NCO/OH-Äquivalentverhältnis von 0,5:1 bis 5:1 entsprechenden Mengen besteht.

Gegenstand der Erfindung ist schließlich auch die Verwendung dieses Beschichtungsmittels zur Herstellung von Beschichtungen auf flächigen Substraten.

Im Rahmen der vorliegenden Erfindungsoffenbarung steht die Abkürzung "HDI" für Hexamethylendiisocyanat und die Abkürzung "TDI" für beliebige Isomere bzw. Isomerengemische des Toluylendiisocyanats (Diisocyantotoluol), insbesondere für die technisch wichtigen Isomeren bzw. Isomerengemische wie 2,4-Diisocyanatotoluol und dessen Gemische mit bis zu 35 Gew.-%, bezogen auf Gemisch, an 2,6-Diisocyanatotoluol.

Bei der beim erfindungsgemäßen Verfahren zum Einsatz gelangenden Polyisocyanatkomponente A) handelt es sich um Lackpolyisocyanate, bzw. Gemische von Lackpolyisocyanaten auf Basis von TDI und HDI. Das Gewichtsverhältnis der in der Komponente A) chemisch eingebauten TDI- und HDI-Einheiten und damit das Gewichtsverhältnis b) in den erfindungsgemäßen Polyisocyanat-Zubereitungen liegt bei 6:1 bis 0,1:1, vorzugsweise 4:1 bis 0,2:1 und besonders bevorzugt bei 2:1 bis 0,25:1. Der NCO-Gehalt der Komponente A), bezogen auf Festharz, liegt im allgemeinen bei 12 bis 25, vorzugsweise 15 bis 23, Gew.-%.

Im allgemeinen handelt es sich bei der Komponente A) um eine Gemisch aus mindestens einer Komponente A1) mit chemisch eingebauten TDI-Einheiten und mindestens einer Komponente A2) mit chemisch eingebauten HDI-Einheiten. Ebenfalls möglich ist jedoch beispielsweise die alleinige Verwendung von Isocyanuratgruppen aufweisenden Mischtrimerisaten aus TDI und HDI als Komponente A), in welchem Falle eine Unterscheidung zwischen Komponenten A1) und A2) keinen Sinn ergeben würde. Ein derartiges Mischtrimerisat, welches für sich allein der erfindungsgemäßen Bedingung bezüglich des Verhältnisses von TDI- zu HDI-Einheiten entspricht, wird beispielsweise unter der Bezeichnung ®Desmodur HL von der Bayer AG vertrieben.

Lackpolyisocyanate, die als Komponente A1) erfindungsgemäß verwendet werden können sind beispielsweise beliebige Isocyanatgruppen aufweisende TDI-Derivate, ausgewählt aus der Gruppe bestehend aus Isocyanuratgruppen, Urethangruppen, Allophanatgruppen und Uretdiongruppen aufweisenden Polyisocyanaten auf TDI-Basis, wobei die Isocyanuratgruppen aufweisenden Polyisocyanate auf TDI-Basis bevorzugt sind. Derartige Polyisocyanate werden beispielsweise unter der Bezeichnung ®Desmodur IL von der Bayer AG vertrieben.

Polyisocyanate, die als Komponente A2) geeignet sind, sind beliebige Isocyanatgruppen aufweisende HDI-Derivate, ausgewählt aus der Gruppe bestehend aus Isocyanuratgruppen, Urethangruppen, Allophanatgruppen, Uretdiongruppen und Biuretgruppen aufweisenden HDI-Derivaten, wobei hier die Biuret- oder Isocyanuratgruppen aufweisenden Lackpolyisocyanate, insbesondere die Isocyanuratgruppen aufweisenden HDI-Derivate bevorzugt sind.

Die besonders bevorzugt als Komponente A) geeigneten Isocyanuratgruppen aufweisenden TDI-Derivate weisen im allgemeinen einen NCO-Gehalt, bezogen auf Feststoff, von 14 bis 23 Gew.-% auf. Der NCO-Gehalt, der als Komponente A2) bevorzugt geeigneten HDI-Derivate, insbesondere der Isocyanuratgruppen aufweisenden HDI-Derivate liegt im allgemeinen bei 17 bis 24 Gew.-%, die Viskosität dieser HDI-Derivate liegt lösungsmittelfrei, vorzugsweise unterhalb 10 000 mPa.s/23°C.

Die Herstellung der aus den Einzelkomponenten A1) und A2) bestehenden Komponente A) kann beispielsweise durch einfaches Abmischen der Einzelkomponenten erfolgen. Neben einem Vermischen der Einzelkomponenten kann jedoch die aus den Einzelkomponenten A1) und A2) bestehende Komponente A) auch beispielsweise durch Trimerisation von TDI in HDI-Derivaten der genannten Art, insbesondere HDI-Trimerisaten als Reaktionsmedium erfolgen. Hierbei erfolgt aufgrund der höheren Reaktivität vor allem eine TDI-Homotrimerisation zu TDI-Derivaten A1), während die vorab hergestellte, vergleichsweise reaktionsträge HDI-Komponente als Reaktionsmedium dient, so daß unmittelbar ein Gemisch aus den Einzelkomponenten A1) und A2) entsteht.

Die Herstellung der genannten Lackpolyisocyanate auf TDI- und/oder HDI-Basis erfolgt nach den an sich bekannten Verfahren des Standes der Technik, wie er sich beispielsweise aus DE-PS 1 644 809, DE-OS 2 616 415, EP-A-0 377 177, EP-A-0 398 749, EP-A-0 496 208, EP-A-0 524 501, EP-A-0 524 500, US-PS 3 001 973, US-PS 3 903 127, US-PS 4 614 785, aus der Zeitschrift "Farben und Lack" 75 (1969), S. 976 oder aus H. Wagner, H. F. Sarx, Lackkunstharze 5. Auflage, Seite 168 f, Carl Hanser Verlag München 1971 ergibt.

Bei den Polyalkylenoxidpolyetheralkoholen B) handelt es sich um einwertige Polyetheralkohole oder ein Gemisch einwertiger Polyetheralkohole mit 6 bis 50, vorzugsweise 7 bis 25 Alkylenoxideinheiten, die mindestens zu 70 Mol-%, vorzugsweise zu mindestens 80 Mol-% und besonders bevorzugt ausschließlich aus Ethylenoxideinheiten bestehen. Neben Ethylenoxideinheiten können in den einwertigen Polyetheralkoholen insbesondere noch Propylenoxideinheiten vorliegen. Die Herstellung dieser einwertigen Polyetheralkohle geschieht in an sich bekannter Weise durch Alkoxylierung von einwertigen Alkoholen. Hierbei können sowohl lineare als auch verzweigte und cyclische Alkohole als Starter eingesetzt werden. Besonders bevorzugt sind C₁- bis C₄-Alkohole wie beispielsweise n-Butanol, n-Propanol, Isopropanol, Ethanol und besonders, Methanol. Unter "endständigen Polyetherketten" sind im Rahmen der Erfindung solche Polyetherketten zu verstehen, die durch die Verwendung der Komponente B) in die erfindungsgemäßen Polyisocyanat-Zubereitung eingebaut worden sind.

Unter der Alkoholkomponente C) sind beliebige, von der Komponente B) verschiedene Alkohole des Molekulargewichtsbereichs 32 bis 900 wie z.B. monofunktionelle Alkohole wie Methanol, Ethanol, die isomeren Propanole, Butanole, Pentanole, Hexanole, Heptanole, Octanole, Nonanole, Decanole, Dodecanole gesättigte und ungesättigte Fettalkohole, Diole wie Ethylenglykol, Propylenglykol, die isomeren Butandiole, Pentandiol, Hexandiol, Octandiol, Dodecandiol, Dimerfettalkohole, Triole wie Glycerin, Trimethylolpropan, Trimethylolethan, Trimerfettalkohole und höherfunktionelle Polyole wie Pentaerythrit, Sorbit zu verstehen. Die genannten Alkohole können selbstverständlich auch als Mischung zum Einsatz gelangen. Bevorzugt werden hierbei auf ein Äquivalent Polyisocyanatkomponente A) nicht mehr als 0,3, besonders bevorzugt nicht mehr als 0,15 Äquivalente der Alkoholkomponente C) eingesetzt.

Zur Herstellung der erfindungsgemäßen Polyisocyanate-Zubereitung werden die gegebenenfalls in inerten Lösungsmitteln gelösten Polyisocyanate A) mit der Polyetherkomponente B) und gegebenenfalls Komponente C) unter Einhaltung eines NCO/OH-Äquivalentverhältnis von 2:1 bis 120:1, vorzugsweise 4:1 bis 60:1 und besonders bevorzugt 5:1 bis 20:1 bei 20 bis 100, vorzugsweise 40 bis 80 °C unter Urethanbildung zur Reaktion gebracht.

Geeignete Lösungsmittel sind z. B. die bekannten üblichen Lacklösemittel wie z. B. Ethylacetat, Butylacetat, Ethylenglykolmonomethyl- oder -ethyletheracetat, Methoxypropylacetat, 2-Butanon, Cyclohexanon, Aceton, Toluol, Xylol oder deren Gemische.

Prinzipiell geeignet sind aber auch Lösungsmittel wie Propylenglykoldiacetat, Diethylenglykol-dimethylether, Diethylenglykolethyl- und -butyletheracetat, N-Methylpyrrolidon und N-Methyl-caprolactam oder Gemische solcher Lösungsmittel mit sich selbst oder mit den vorstehend genannten Lösungsmitteln.

Der Anteil an organischen Lösungsmitteln sollte 50 Gew.-%, vorzugsweise 40 Gew.-%, besonders bevorzugt 35 Gew.-%, bezogen auf Reaktionsgemisch, nicht überschreiten. Bevorzugt wird bei Einsatz von lösungsmittelfreien Isocyanatkomponenten A) auf Lösungsmittel völlig verzichtet.

Im übrigen werden Art und Mengenverhältnisse der Ausgangskomponenten im Rahmen der gemachten Angaben so gewählt, daß die resultierenden Polyisocyanatgemische
a) einen Gehalt an Isocyanatgruppen bezogen auf Festharz (berechnet als NCO, Molekulargewicht 42) von 6 % bis 21 %, bevorzugt 8 bis 18 %,
b) ein Verhältnis von TDI-Einheiten bl) zu HDI-Einheiten b2) entsprechend der oben gemachten Definition von 6:1 bis 0,1:1, vorzugsweise 4:1 bis 0,2:1 und besonders bevorzugt von 2:1 bis 0,25:1 und
c) einen Gehalt an innerhalb von endständigen Polyetherketten angeordneten Ethylenoxideinheiten von 5 bis 40 Gew.-%, vorzugsweise 10 bis 30 Gew.-% und besonders bevorzugt 15 bis 25 Gew.-% aufweisen.

Die erfindungsgemäßen Polyisocyanat-Zubereitungen werden in Form von Lösungen der oben beispielhaft genannten Art bzw. lösungsmittelfrei der erfindungsgemäßen Verwendung zugeführt. Die Zubereitungen lassen sich leicht, ohne Einsatz hoher Scherkräfte in Wasser emulgieren. Dabei entstehen stabile Emulsionen, in denen die Reaktion der Isocyanatgruppen überraschend langsam abläuft. Die Emulsionen weisen im allgemeinen eine Standzeit von mehreren Stunden ohne Ausfällungen oder Bodensatz auf.

Die erfindungsgemäßen Zweikomponenten-Polyurethan-Beschichtungsmittel enthalten die erfindungsgemmäßen Polyisocyanat-Zubereitungen als Vernetzer-Komponente I, d.h. als eine wesentliche Bindemittelkomponente. Die zweite Bindemittelkomponente in den erfindungsgemäßen Beschichtungsmitteln besteht aus einer in Wasser löslichen oder dispergierbaren Polyhydroxylkomponente II), die ihrerseits eine (mittlere) Hydroxylfunktionalität von mindestens 2 aufweist und aus mindestens einer in Wasser löslichen oder dispergierbaren Polyhydroxylverbindungen, vorzugsweise des Molekulargewichtsbereichs Mₙ 500 bis 50 000 und des Hydroxylzahlbereichs 150 bis 300 besteht. Bei dem genannten Molekulargewicht handelt es sich um das gelpermeationschromatographisch unter Verwendung von Polystyrol als Standard ermittelbare Zahlenmittel.

Als zweite Bindemittelkomponente beispielhaft genannt seien in Wasser lösliche oder dispergierbare, Hydroxylgruppen aufweisende Polyurethane, Polyetherpolyole, Polyesterpolyole oder Polyacrylatharze. Auch Hydroxylgruppen aufweisende Urethan- und/oder Ester- und/oder Carbonatgruppen aufweisende Polyole des genannten Molekulargewichts- und Hydroxylzahlbereichs sind geeignet.

Die Verwendung von in Wasser gelösten oder dispergierten, Hydroxylgruppen aufweisenden Vinylpolymerisaten ist bevorzugt. Diese Vinylpolymerpolyole enthalten Sulfonat- und/oder Carboxylatgruppen, vorzugsweise Carboxylatgruppen und gegebenenfalls Sulfonsäure- und/oder Carboxylgruppen, vorzugsweise Carboxylgruppen, und weisen ein mittleres Molekulargewicht Mₙ (Zahlenmittel) von 500 bis 50000, eine Hydroxylzahl von 16,5 bis 264 mgKOH/g und eine Säurezahl, bezogen auf alle Carboxyl- und/oder Sulfonsäuregruppen, die dabei zu 10 bis 100 % in der Salzform vorliegen, von 4 bis 156 mg KOH/g Festharz auf.

Die Herstellung der Hydroxylgruppen aufweisenden Polymerisate erfolgt durch an sich bekannte Methoden der radikalischen Polymerisation, z. B. der Lösungspolymerisation, der Emulsionspolymerisation und der Suspensionspolymerisation. Bevorzugt sind die Verfahren der Lösungs- und der Emulsionspolymerisation.

Zusätzlich zur erfindungsgemäßen Polyisocyanat-Zubereitung können zur Erzielung spezieller Effekte, beispielsweise Elastifizierung der Beschichtungen, noch hydrophilierte bzw. nichthydrophilierte Polyisocyanate beispielsweise auf Basis Hexamethylendiisocyanat oder Isophorondiisocyanat mit Biuret- und/oder Isocyanurat- und/oder Uretdion- und/oder Allophanat- und/oder Urethangruppen eingesetzt werden, wobei derartige zusätzliche Polyisocyanate, falls überhaupt, in einer Menge von max. 100 Gew.-%, vorzugsweise max. 50 Gew.-%, bezogen auf das Gewicht der erfindungsgemäßen Polyisocyanat-Zubereitung beträgt. Besonders bevorzugt wird auf die Mitverwendung derartiger zusätzlicher Polyisocyanate verzichtet.

In den erfindungsgemäßen Zweikomponenten-Polyurethan-Beschichtungsmitteln liegen die Bindemittelkomponenten I), d.h. die erfindungsgemäßen Polyisocyanat-Zubereitungen sowie gegebenenfalls Zusätze von Polyisocyanaten und die Bindemittelkomponente II), d.h. die Hydroxylgruppen aufweisenden Verbindungen in solchen Mengen vor, die einem NCO/OH-Äquivalentverhältnis, bezogen auf die alkoholischen Hydroxylgruppen der Komponente II) von 0,5:1 bis 5:1, vorzugsweise 0,8:1 bis 2:1 entsprechen.

Der Wassergehalt der in Form von wäßrigen Lösungen oder insbesondere Dispersionen vorliegenden Beschichtungsmitteln liegt im allgemeinen bei 35 bis 80, vorzugsweise 40 bis 70 Gew.-%. Der Gehalt an Lösungsmitteln der oben beispielhaft genannten Art liegt im allgemeinen bei 0 bis 15 Gew.-%.

Die erfindungsgemäßen Beschichtungsmitteln können selbstverständlich neben den genannten Bindemitteln, Wasser und Lösungsmitteln noch weitere an sich bekannte Hilfs- und Zusatzmittel enthalten. Hierzu gehören beispielsweise nichtfunktionelle wäßrige Lackbindemittel zur Erzielung spezieller Eigenschaften, beispielsweise als Additive zur Haftverbesserung; Verlaufshilfsmittel, Farbpigmente, Füllstoffe, Mattierungsmittel, Verdickungsmittel, Entschäumer oder auch externe Emulgatoren der an sich bekannten Art.

Die erfindungsgemäßen Beschichtungsmittel zeigen eine überraschend schnelle Trocknung bereits bei Raumtemperatur, so daß sich die erfindungsgemäßen Polyisocyanatgemische insbesondere für einen Einsatz in der Holz- und Möbelindustrie empfehlen. Infolge der bei industrieller Anwendung erforderlichen kurzen Taktzeiten ist bei diesem Einsatzzweck eine möglichst schnelle Schleifbarkeit erwünscht.

Selbstverständlich ist es jedoch auch möglich, die erfindungsgemäßen wäßrigen 2-Komponenten-Polyurethanlacke bei erhöhter Temperatur bzw. durch Einbrennen bei Temperaturen bis 200°C zu trocknen.

Die erfindungsgemäßen Beschichtungsmittel eignen sich insbesondere zur Beschichtung beliebiger, wasserresistenter flächiger Substrate. In diesem Zusammenhang beispielhaft genannt seien Flächengebilde aus Holz, Spanplatten, Metall, Glas, Stein, keramische Materialien, Beton, harte und flexible Kunststoffe, Textilien, Leder und Papier, die vor der Beschichtung gegebenenfalls auch mit üblichen Grundierungen versehen werden können.

Die mit Hilfe der erfindungsgemäßen Polyisocyanatgemische hergestellten 2-Komponenten-PUR-Lacke zeichnen sich nicht nur durch ihre schnelle Trocknung bei Umgebungstemperatur aus, sondern auch durch ihre hervorragenden optischen Eigenschaften wie Oberflächenglanz, Verlauf und Transparenz.

Die folgenden Beispiele dienen zur weiteren Erläuterung der Erfindung. Alle Prozentangaben beziehen sich, soweit nicht anderslautend vermerkt, auf Gewichtsprozente. Die Angaben bezüglich des TDI/HDI-Verhältnisses beziehen sich ebenfalls auf das Gewichtsverhältnis dieser Komponenten.

### Beispiel 1

### Herstellung einer erfindungsgemäßen Polyisocyanat-Zubereitung

Zu 508,6 g (2,1 val) ®Desmodur HL (Handelsprodukt der Bayer AG, Leverkusen), ein Butylacetat enthaltenes Trimerisat auf Basis HDI/TDI (Festkörpergehalt: 60 %, NCO-Gehalt: 10,5 %, Viskosität: 2 200 mPas), werden nach Zusatz von 0,1 g Benzoylchlorid bei 50°C 101,9 g eines auf Methanol gestarteten, monofunktionellen Polyethylenoxidpolyethers mit einem mittleren Molekulargewicht von 550 zugetropft. Man rührt bei 50°C, bis ein konstanter NCO-Gehalt von 7,2 % erreicht ist.

Die erhaltene, lösungsmittelhaltige Polyisocyanat-Zubereitung besitzt folgende Kenndaten:

| | |
|---|---|
| Festkörpergehalt | 66,7 % |
| NCO-Gehalt | 7,2 % |
| Viskosität | 3200 mPas/23 °C |
| Ethylenoxidgehalt | 25 % |
| Verhältnis TDI/HDI | 1,8:1 |

### Beispiel 2

Zu 1 067 g Desmodur HL (siehe unter Beispiel 1) werden bei 50°C zusammen mit 217 g eines auf Methanol gestarteten monofunktionellen Polyethylenoxidpolyethers mit dem mittleren Molekulargewicht 550 73,5 g Dodecanol zugetropft. Man rührt bei 50°C bis ein konstanter NCO-Gehalt von 6,0 % erreicht ist. Die erhaltene, lösungsmittelhaltige Polyisocyanat-Zubereitung besitzt folgende Kenndaten:

| | |
|---|---|
| Festkörpergehalt | 68,5 % |
| NCO-Gehalt | 6,0 % |
| Viskosität | 2600 mPas/23 °C |
| Ethylenoxidgehalt | 23 % |
| Verhältnis TDI/HDI | 1,8 |

### Beispiel 3

### Herstellung einer erfindungsgemäßen Polyisocyanat-Zubereitung aus einer Mischung von Polyisocyanuraten

Zu 443 g ®Desmodur IL 1351 (Handelsprodukt der Bayer AG, Leverkusen), ein Butylacetat enthaltendes Trimerisat auf Basis TDI (Festkörpergehalt: 51 %, NCO-Gehalt: 8,0 %, Viskosität: 1 600 mPas) und 502 g ®Desmodur N 3300 (Handelsprodukt der Bayer AG, Leverkusen), ein lösungsmittelfreies Trimerisat auf Basis HDI (NCO-Gehalt: 21,5 %, Viskosität: 3 000 mPas), werden bei 50°C 142 g eines auf Methanol gestarteten, monofunktionellen Polyethylenoxidpolyethers mit einem mittleren Molekulargewicht von 550 zugetropft und weitergerührt, bis ein NCO-Gehalt von ca. 12,2 % erreicht ist.

Die erhaltene, lösungsmittelhaltige Polyisocyanat-Zubereitung besitzt folgende Kenndaten:

| | |
|---|---|
| Festkörpergehalt | 80 % |
| Viskosität bei 23°C | 1400 mPas |
| NCO-Gehalt | 12,2 % |
| Ethylenoxidgehalt | 16,6 % |
| Verhältnis TDI/HDI | 0,45 |

### Beispiel 4 nicht erfindungsgemäß (Vergleichsbeispiel)

### Herstellung einer nicht erfindungsgemäßen Polyisocyanat-Zubereitung aus einem Trimerisat auf Basis TDI

Zu 982 g ®Desmodur IL 1351 (Handelsprodukt der Bayer AG, Leverkusen), ein Butylacetat enthaltendes Trimerisat auf Basis TDI (Festkörpergehalt: 51 %, NCO-Gehalt: 8,0 %, Viskosität: 1 600 mPas) werden bei 50°C 114 g eines auf Methanol gestarteten, monofunktionellen Polyethylenoxidpolyethers mit einem mittleren Molekulargewicht von 550 zugetropft und weitergerührt, bis ein NCO-Gehalt von ca. 6,4 % erreicht ist.

Die erhaltene, lösungsmittelhaltige Polyisocyanat-Zubereitung besitzt folgende Kenndaten:

| | |
|---|---|
| Festkörpergehalt | 56,1 % |
| Viskosität bei 23°C | 1100 mPas |
| NCO-Gehalt | 6,4 % |
| Ethylenoxidgehalt | 18,5 % |

### Beispiel 5 nicht erfindungsgemäß (Vergleichsbeispiel)

Nicht erfindungsgemäße Polyisocyanat-Zubereitung aus einem Trimerisat auf Basis HDI nach Beispiel 1 der DE-OS 4 136 618.

| | |
|---|---|
| Festkörpergehalt | 100 % |
| Viskosität bei 23°C | 3050 mPas |
| NCO-Gehalt | 17,3 % |

### Beispiel 6

### Herstellung eines wasserdispergierten Vinylpolymerisats

In einem 127 Liter Autoklav werden 10 000 g Essigsäure-n-butylester vorgelegt. Anschließend wird mit Stickstoff gespült und der Autoklav verschlossen. Dann wird unter Rühren auf 110°C erwärmt. Daraufhin wird eine Monomermischung bestehend aus 17 488 g Methacrylsäure-2-hydroxyethylester, 9 944 g Methacrylsäuremethylester, 22 860 g Acrylsäure-n-butylester und 4 572 g Acrylsäure sowie eine Lösung von 1 905 g Azoisobutyronitril in 29 718 g Essigsäure-n-butylester gleichzeitig und gleichmäßig in 4 Stunden zudosiert. Nach Beendigung des Zulaufs wird mit einer Lösung von 381 g t-Butyl-per-2-ethylhexanoat in 762 g Essigsäure-n-butylester nachaktiviert. Es wird 4 Stunden nachgerührt und danach die Polymerisatlösung mit einer Mischung von 2 591 g 25 %iger wäßriger Ammoniaklösung und 112 kg entionisiertem Wasser vereinigt. Danach wird unter Anlegen eines Vakuums von 200 - 400 mbar und bei einer Temperatur von 50 - 70°C Essigsäure-n-butylester zusammen mit Wasser und Restmonomeren abdestilliert.

Danach wird soviel Wasser zugegeben, daß eine 30 %ige, sehr feinteilige Dispersion resultiert.

| Kenndaten: | |
|---|---|
| Festkörpergehalt | 30 % |
| Viskosität | ca. 10000 mPas/23 °C |
| OH-Gehalt | 4,0 % bez. auf Festharz |

### Beispiel 7

### Herstellung eines wäßrigen 2-K-Lacks

78 Gew.-Teile des Vinylpolymerisats aus Beispiel 6, 0,83 Gew.-Teile eines handelsüblichen Verdickers (Acrysol RM8 der Fa. Rohm u. Haas) und 0,5 Gew.-Teile eines handelsüblichen Entschäumers werden unter Zugabe von 16,3 Gew.-Teilen Wasser sorgfältig vermischt. Die dabei erhaltene Stammkomponente für einen wasserverdünnbaren 2-Komponentenlack hat eine praktisch unbegrenzte Lagerstabilität.

Zu der Stammkomponente werden 29,5 Gew.-Teile Polyisocyanat-Zubereitung aus Beispiel 1 und 10 Gew.-Teile Wasser zur Einstellung auf Verarbeitungskonsistenz hinzugefügt und intensiv vermischt. Man erhält einen verarbeitungsfähigen wasserverdünnbaren 2-Komponenten-Polyurethanlack, der in einer Naßfilmschichtstärke von 200 µm auf eine gereinigte Glasplatte aufgetragen wird.

| | |
|---|---|
| Verarbeitungszeit | > 1 Stunde |
| Sandtrocknung | 70 min. |
| Aussehen | hochglänzender transparenter Lackfilm mit gutem Verlauf |
| Pendeldämpfung | 124 s (3 Stunden nach Applikation) |

### Beispiel 8

### Herstellung eines wäßrigen 2-K-Lacks

Zu 78 Gew.-Teile der Stammkomponente wie unter Beispiel 7 berschrieben werden 35,4 Gew.-Teile der Polyisocyanat-Zubereitung aus Beispiel 2 zugefügt und nach intensivem Vermischen mit 9 Gew.-Teilen Wasser auf Verarbeitungskonsistenz eingestellt. Man erhält einen verarbeitungsfähigen wasserverdünnbaren 2-Komponenten-Polyurethanlack, der in einer Naßfilmschichtstärke von 200 µm auf eine gereinigte Glasplatte aufgetragen wird.

| | |
|---|---|
| Verarbeitungszeit | > 1 Stunde |
| Sandtrocknung | 66 min. |
| Aussehen | hochglänzender transparenter Lackfilm |
| Pendeldämpfung | 132 s (3 Stunden nach Applikation) |

### Beispiel 9 (nicht erfindungsgemäß)

### Herstellung eines wäßrigen 2-Komponentenlacks

Zu 78 Gew.-Teile der Stammkomponente wie unter Beispiel 7 beschrieben werden 33 Gew.-Teile der nicht erfindungsgemäßen Polyisocyanat-Zubereitung aus Beispiel 4 zugefügt und nach intensivem Vermischen mit 10 Gew.-Teilen Wasser auf Verarbeitungskonsistenz eingestellt. Man erhält einen verarbeitungsfähigen wasserverdünnbaren 2-Komponenten-Polyurethanlack, der in einer Naßfilmschichtstärke von 200 µm auf eine gereinigte Glasplatte aufgetragen wird.

| | |
|---|---|
| Verarbeitungszeit | < 20 min. |
| Sandtrocknung | 50 min. |
| Aussehen | stark trüber, rissiger Lackfilm mit Oberflächenstörungen |
| Pendeldämpfung | nicht meßbar |

### Beispiel 10 (nicht erfindungsgemäß)

### Herstellung eines wäßrigen 2-Komponentenlacks

Zu 78 Gew.-Teile des Stammlackes wie unter Beispiel 7 berschrieben werden 15,4 Gew.-Teile der nicht erfindungsgemäßen Polyisocyanat-Zubereitung aus Beispiel 5 zugefügt und nach intensivem Vermischen mit 32 Gew.-Teilen Wasser auf Verarbeitungskonsistenz eingestellt. Man erhält einen verarbeitungsfähigen wasserverdünnbaren 2-Komponenten-Polyurethanlack, der in einer Naßfilmschichtstärke von 200 µm auf eine gereinigte Glasplatte aufgetragen wird.

| | |
|---|---|
| Verarbeitungszeit | > 1 Stunde |
| Sandtrocknung | 116 min. |
| Aussehen | leicht trüber, schlieriger Lackfilm |
| Pendeldämpfung | 26 s (3 Stunden nach Applikation) |

### Beispiel 11

### Herstellung eines wasserdispergierten Vinylpolymerisats

In einem 3 Liter Rührautoklaven mit Stickstoffeinlaß und -auslaß werden 400 g Methoxypropylacetat vorgelegt. Es wird kräftig mit Stickstoff gespült und danach unter Rühren auf 145°C erwärmt. Innerhalb von 4 Stunden wird eine Mischung aus 508 g Methacrylsäurehydroxypropylester, (Anlagerungsprodukt von Propylenoxid an Methacrylsäure) 160 g Acrylsäure, 1000 g Methacrylsäuremethylester und 252 g Acrylsäure-n-butylester und die Initiatorlösung, bestehend auf 67 g Di-t-butylperoxid in 100 g Methoxypropylacetat gleichzeitig und gleichmäßig zudosiert. Anschließend wird auf eine Innentemperatur von 140°C abgekühlt und mit 13 g Di-t-butylperoxid nachaktiviert. Danach wird das organisch gelöste Polymerisat mit einer wäßrigen Neutralisationslösung von 90,7 g 25 %iger Ammoniak-lösung in 3000 ml Wasser in einem 6 Liter Rührkolben vereinigt. Die wäßrig/organische Dispersion wird homogen gerührt, danach wird bei einem Druck von 100 - 300 mbar destilliert, wobei das Lösungsmittel Methoxypropylacetat und Restmonomere entfernt werden.

Man erhält eine nahezu transparente Dispersion mit folgenden Kenndaten:

| | |
|---|---|
| Festkörpergehalt | 33,2 Gew.-% |
| Viskosität | 3000 mPas (23 °C) |
| OH-Gehalt | 3,0 Gew.-% bez. auf Festharz |

### Beispiel 12

### Herstellung eines wäßrigen 2-Komponentenlacks

100 Gew.-Teile des hydroxyfunktionellen Polyacrylatharzes aus Beispiel 11 werden mit 0,7 Gew.-Teilen der 25 %igen wäßrigen Lösung eines handelsüblichen Emulgators (Emulgator WN der Fa. Bayer AG) und 2,6 Gew.-Teilen einer 20 %-igen Lösungen eines handelsüblichen Polyurethanverdickers (Acrysol RM8 der Fa. Rohm und Haas) in Wasser sorgfältig gemischt. Die dabei erhaltene Stammkomponente für einen wasserverdünnbaren Zweikomponenten-Polyurethanlack hat praktisch unbegrenzte Lagerstabilität.

Nach Zugabe von 45,4 Gew.-Teilen des Polyisocyanats aus Beispiel 2 sowie 30 Gew.-Teilen Wasser erhält man nach intensiver Durchmischung einen verarbeitungsfähigen wäßrigen 2-Komponenten-Polyurethanlack, der in einer Naßfilmschichtstärke von 120 µm auf eine gereinigte Glasplatte aufgetragen wird.

| | |
|---|---|
| Verarbeitungszeit | > 1 Stunde |
| Handtrocknung | 17 min. |
| Aussehen | klarer glänzender Lackfilm |

### Beispiel 13

### Herstellung eines wäßrigen 2-Komponentenlacks

Nach Zugabe von 24,2 Gew.-Teilen des Polyisocyanats aus Beispiel 3 sowie 29 Gew.-Teilen Wasser zu 100 Gew.-Teilen der Stammkomponente nach Beispiel 12 erhält man nach intensiver Durchmischung einen verarbeitungsfähigen wäßrigen 2-Komponenten-Polyurethanlack, der in einer Naßfilmschichtstärke von 120 µm auf eine gereinigte Glasplatte aufgetragen wird.

| | |
|---|---|
| Verarbeitungszeit | > 2 Stunde |
| Handtrocknung | 20 min. |
| Aussehen | klarer glänzender Lackfilm |

## Patentansprüche

1. In Wasser dispergierbare Polyisocyanat-Zubereitungen auf Basis von aliphatischen und aromatischen Diisocyanaten, gekennzeichnet durch
a) einen Gehalt an Isocyanatgruppen (berechnet als NCO, Molekulargewicht = 42), bezogen auf Festharz, von 6 bis 21 Gew.-%,
b) ein Gewichtsverhältnis von
b1) mindestens ein modifiziertes Polyisocyanat, ausgewählt aus der Gruppe bestehend aus Isocyanuratgruppen, Urethangruppen, Allophanatgruppen und Uretdiongruppen aufweisenden Polyisocyanaten, bildenden TDI-Einheiten (berechnet als C₉H₆N₂O₂, Molekulargewicht = 174)
zu
b2) mindestens ein modifiziertes Polyisocyanat, ausgewählt aus der Gruppe bestehend aus Isocyanuratgruppen, Urethangruppen, Allophanatgruppen, Uretdiongruppen und Biuretgruppen aufweisenden Polyisocyanaten, bildenden HDI-Einheiten (berechnet als C₈H₁₂N₂O₂, Molekulargewicht = 168)
von 6:1 bis 0,1:1 und
c) einen Gehalt an innerhalb von endständigen Polyetherketten angeordneten Ethylenoxideinheiten (berechnet als C₂H₄O, Molekulargewicht 44) von 5 bis 40 Gew.-%, wobei die Polyetherketten im statistischen Mittel 6 bis 50 Ethylenoxideinheiten aufweisen.

2. Wasserdispergierbare Polyisocyanat-Zubereitungen nach Anspruch 1, gekennzeichnet durch
a) einen Gehalt an Isocyanatgruppen, bezogen auf Festharz, von 8 bis 18 Gew.-%, und
b) ein Gewichtsverhältnis von TDI-Einheiten b1) zu HDI-Einheiten b2) von 4:1 bis 0,2:1.

3. Wasserdispergierbare Polyisocyanat-Zubereitungen gemäß Anspruch 1 und 2, gekennzeichnet durch
b) ein Gewichtsverhältnis von TDI-Einheiten b1) zu HDI-Einheiten b2) von 2:1 bis 0,25:1.

4. Wasserdispergierbare Polyisocyanat-Zubereitungen gemäß Anspruch 1 bis 3, dadurch gekennzeichnet, daß die TDI-Struktureinheiten b1) ausschließlich als Teil von Isocyanuratgruppen aufweisenden Polyisocyanaten vorliegen.

5. Verfahren zur Herstellung von Polyisocyanat-Zubereitungen gemäß Anspruch 1 bis 4, dadurch gekennzeichnet, daß man
A) eine, gegebenenfalls ein Gemisch von unterschiedlichen Polyisocyanaten darstellende Polyisocyanatkomponente mit einem NCO-Gehalt von 12 bis 25 Gew.-%, in der sowohl
A1) modifizierte Polyisocyanate mit eingebauten TDI-Einheiten, ausgewählt aus der Gruppe bestehend aus Isocyanuratgruppen, Urethangruppen, Allophanatgruppen und Uretdiongruppen aufweisenden Polyisocyanaten, als auch
A2) eingebaute HDI-Einheiten aufweisende modifizierte Polyisocyanate, ausgewählt aus der Gruppe bestehend aus Isocyanuratgruppen, Urethangruppen, Allophanatgruppen, Uretdiongruppen und Biuretgruppen aufweisenden Polyisocyanaten, vorliegen, mit
B) einer einwertigen Polyetherkomponente, bestehend aus mindestens einem einwertigen Polyetheralkohol mit (im statistischen Mittel) von 6 bis 50 Alkylenoxideinheiten, die zu mindestens 70 Mol-% aus Ethylenoxideinheiten bestehen und
C) gegebenenfalls weiteren Alkoholen
unter Einhaltung eines NCO/OH-Äquivalentverhältnisses von 2:1 bis 120:1 umsetzt, wobei im übrigen Art und Mengenverhältnisse der Ausgangskomponenten so gewählt werden, daß die resultierenden Umsetzungsprodukte den unter a) bis c) gemachten Bedingungen entsprechen.

6. Verfahren gemäß Anspruch 5, dadurch gekennzeichnet, daß man als Komponente B) einen im statistischen Mittel von 7 bis 25 Ethylenoxideinheiten aufweisenden Polyethylenglykolmonomethylether verwendet.

7. Wäßriges Zweikomponenten-Polyurethan-Beschichtungsmittel, dessen Bindemittel im wesentlichen aus einer Kombination aus:
I) einer Polyisocyanat-Zubereitung gemäß Anspruch 1 bis 4 und
II) einer in Wasser löslichen oder dispergierbaren Polyhydroxylkomponente
in einem NCO/OH-Äquivalentverhältnis von 0,5:1 bis 5:1 entsprechenden Mengen besteht.

8. Wäßriges Zweikomponenten-Polyurethan-Beschichtungsmittel gemäß Anspruch 7, dadurch gekennzeichnet, daß die Komponente II) aus mindestens einem in Wasser löslichen oder dispergierbaren, Hydroxylgruppen aufweisenden Polyacrylatharz des Molekulargewichtsbereichs Mₙ 500 bis 50.000 besteht, wobei Mₙ das Zahlenmittel ist, das gelpermeationschromatografisch unter Verwendung von Polystyrol als Standard bestimmt wird.

9. Verwendung von Zweikomponenten-Beschichtungsmitteln gemäß Anspruch 7 und 8 zur Herstellung von Beschichtungen auf flächigen Substraten.

## Claims

1. Polyisocyanate formulations dispersible in water, based on aliphatic and aromatic diisocyanates, characterised by
a) a content of isocyanate groups (calculated as NCO, molecular weight equal to 42), based on solid resin, of from 6 to 21 wt.%,
b) a weight ratio of
b1) at least one modified polyisocyanate, selected from the group comprising polyisocyanates containing isocyanurate groups, urethane groups, allophanate groups and uretdione groups, forming TDI units (calculated as C₉H₆N₂O₂, molecular weight equal to 174) to
b2) at least one modified polyisocyanate, selected from the group comprising polyisocyanates containing isocyanurate groups, urethane groups, allophanate groups, uretdione groups and biuret groups, forming HDI units (calculated as C₈H₁₂N₂O₂, molecular weight equal to 168) of from 6:1 to 0.1:1 and
c) a content of ethylene oxide units arranged within terminal polyether chains (calculated as C₂H₄O, molecular weight 44) of from 5 to 40 wt.%, wherein the polyether chains contain, on statistical average, from 6 to 50 ethylene oxide units.

2. Water-dispersible polyisocyanate formulations according to claim 1, characterised by
a) a content of isocyanate groups, based on solid resin, of from 8 to 18 wt.%, and
b) a weight ratio of TDI units b1) to HDI units b2) of from 4:1 to 0.2:1.

3. Water-dispersible polyisocyanate formulations according to claims 1 and 2, characterised by
b) a weight ratio of TDI units b1) to HDI units b2) of from 2:1 to 0.25:1.

4. Water-dispersible polyisocyanate formulations according to claims 1 to 3, characterised in that the TDI structural units b1) are present exclusively as a part of the polyisocyanates containing isocyanurate groups.

5. Method for the preparation of polyisocyanate formulations according to claims 1 to 4, characterised in that
A) a polyisocyanate component, optionally being a mixture of different polyisocyanates, having an NCO content of from 12 to 25 wt.%, wherein there are present both
A1) modified polyisocyanates having incorporated TDI units, selected from the group comprising polyisocyanates containing isocyanurate groups, urethane groups, allophanate groups and uretdione groups, and
A2) modified polyisocyanates having incorporated HDI units, selected from the group comprising polyisocyanates containing isocyanurate groups, urethane groups, allophanate groups and uretdione groups and biuret groups,
is reacted with
B) a monovalent polyether component, consisting of at least one monovalent polyether alcohol having (on statistical average) from 6 to 50 alkylene oxide units composed to the extent of at least 70 mol-% of ethylene oxide units and
C) optionally other alcohols,
an NCO/OH equivalent ratio of from 2:1 to 120:1 being maintained, the nature and the proportions of the starting components incidentally being so selected that the resulting reaction products fulfil the conditions given under a) to c).

6. Method according to claim 5, characterised in that a polyethylene glycol monomethyl ether having, on statistical average, from 7 to 25 ethylene oxide units is used as component B).

7. Aqueous two-component polyurethane coating material, the binder thereof consists substantially of a combination of
I) a polyisocyanate formulation according to claims 1 to 4 and
II) a polyhydroxyl component, soluble or dispersible in water,
in quantities corresponding to an NCO/OH equivalent ratio of 0.5:1 to 5:1.

8. Aqueous two-component polyurethane coating material according to claim 7, characterised in that component II consists of at least one acrylic resin in the molecular weight range Mₙ of from 500 to 50,000, which resin contains hydroxyl groups and is soluble or dispersible in water, Mₙ being the number average, determined by gel permeation chromatography using polystyrene as standard.

9. Use of two-component polyurethane coating materials according to claims 7 and 8 for the production of coatings on flat substrates.

## Revendications

1. Compositions de polyisocyanates dispersables dans l'eau, à base de diisocyanates aliphatiques et aromatiques, caractérisées par
a) une teneur en groupes isocyanates (exprimée en NCO, poids moléculaire = 42), sur la résine solide, de 6 à 21 % en poids,
b) un rapport en poids entre
b1) au moins un polyisocyanate modifié, choisi dans le groupe consistant en les polyisocyanates à groupes isocyanurates, à groupes uréthanes, à groupes allophanates et à groupes uretdiones, formant des motifs de TDI (exprimé en C₉H₆N₂O₂, poids moléculaire = 174)
et
b2) au moins un polyisocyanate modifié choisi dans le groupe consistant en les polyisocyanates à groupes isocyanurates, à groupes uréthanes, à groupes allophanates, à groupes uret-diones et à groupes biuret, tonnant des motifs de HDI (exprimé en C₈H₁₂N₂O₂, poids moléculaire = 168)
de 6:1 à 0,1:1 et
c) une teneur en motifs d'oxyde d'éthylène disposés à l'intérieur de chaînes de polyéthers terminales (exprimé en C₂H₄O, poids moléculaire 44) de 5 à 40 % en poids, les chaînes de polyéther contenant en moyenne statistique de 6 à 50 motifs d'oxyde d'éthylène.

2. Compositions de polyisocyanates dispersables dans l'eau selon la revendication 1, caractérisées par
a) une teneur en groupes isocyanates de 8 à 18 % en poids sur la résine solide et
b) un rapport en poids de 4:1 à 0,2:1 entre les motifs de TDI b1) et les motifs de HDI b2).

3. Compositions de polyisocyanates dispersables dans l'eau selon les revendications 1 et 2, caractérisées par
b) un rapport en poids de 1:1 à 0,25:1 entre les motifs de TDI b1) et les motifs de HDI b2).

4. Compositions de polyisocyanates dispersables dans l'eau selon les revendications 1 à 3, caractérisées en ce que les motifs de structure de TDI b1) sont présents exclusivement en tant que constituants de polyisocyanates à groupes isocyanurates.

5. Procédé de préparation des compositions de polyisocyanates selon les revendications 1 à 4, caractérisé en ce que l'on fait réagir
A) un composant polyisocyanate consistant le cas échéant en un mélange de polyisocyanates différents, à une teneur en NCO de 12 à 25 % en poids, dans lequel il y a à la fois
A1) des polyisocyanates modifiés à motifs de TDI combinés chimiquement, choisis parmi les polyisocyanates à groupes isocyanurates, à groupes uréthanes, à groupes allophanates et à groupes uret-diones, et
A2) des polyisocyanates modifiés à motifs de HDI combinés chimiquement, choisis panni les polyisocyanates à groupes isocyanurates, à groupes uréthanes, à groupes allophanates, à groupes uret-diones et à groupes biurets,
avec
B) un composant polyéther monovalent consistant en au moins un polyéther-alcool monovalent à (en moyenne statistique) 6 à 50 motifs d'oxydes d'alkylène, consistant pour au moins 70 mol % en motifs d'oxyde d'éthylène et
C) le cas échéant d'autres alcools,
en maintenant un rapport dc 2:1 à 120:1 entre les équivalents de NCO et les équivalents d'OH, la nature et les proportions relatives des composants de départ étant pour le reste choisies en sorte que les produits de réaction obtenus satisfassent aux conditions indiquées ci-dessus sous a) à c).

6. Procédé selon la revendication 5, caractérisé en ce que l'on utilise en tant que composant B) un éther monométhylique de polyéthylèneglycol contenant en moyenne statistique 7 à 25 motifs d'oxyde d'éthylène.

7. Produit de revêtement aqueux à deux composants, à base de polyuréthanes, dont le liant consiste essentiellement en une combinaison de :
I) une composition de polyisocyanates selon les revendications 1 à 4 et
II) un composant polyhydroxylé soluble ou dispersable dans l'eau,
en quantités correspondant à un rapport de 0,5:1 à 5:1 entre les équivalents de NCO et les équivalents d'OH.

8. Produit de revêtement aqueux à deux composants à base de polyuréthanes selon la revendication 7, caractérisé en ce que le composant II) consiste en au moins une résine de polyacrylate à groupes hydroxy, soluble ou dispersable dans l'eau, dont le poids moléculaire Mₙ est situé dans l'intervalle de 500 à 50 000, Mₙ étant le poids moléculaire moyen, moyenne en nombre, déterminé par chromatographie de perméation sur gel avec utilisation d'un polystyrène en tant qu'étalon.

9. Utilisation des produits de revêtement à deux composants selon la revendication 7 et 8 pour l'application de revêtements sur des supports planiformes.
